# EUROPÄISCHE PATENTSCHRIFT

(11) **EP 3 007 940 B1**
(45) Veröffentlichungstag und Bekanntmachung des Hinweises auf die Patenterteilung: **13.09.2017**
(21) Anmeldenummer: 14726977.3
(22) Anmeldetag: 27.05.2014
(51) Int. Cl.: B60R 21/235

(54) **OPW-AIRBAG**
OPW AIRBAG
SAC GONFLABLE TISSÉ D'UNE SEULE PIÈCE (OPW)

(30) Priorität: 10.06.2013 DE 102013009764
(43) Veröffentlichungstag der Anmeldung: 20.04.2016
(73) Patentinhaber: Global Safety Textiles GmbH, 79689 Maulburg (DE)
(72) Erfinder: ALBIEZ, Daniel, 79730 Murg (DE)
(74) Vertreter: Fischer & Konnerth
(86) Internationale Anmeldenummer: PCT/EP2014/060985
(87) Internationale Veröffentlichungsnummer: WO 2014/198534

(56) Entgegenhaltungen:
- WO-A1-01/70543
- WO-A1-2007/128547
- DE-A1- 10 326 757
- DE-A1-102006 044 385
- US-A1- 2004 029 468

## Beschreibung

OPW-Airbag mit einer Nahtkonstruktion für ein Gewebe mit wenigstens einer, wenigstens zweilagigen ersten Kammer mit einer oberen und einer unteren, jeweils mit einer fluidundurchlässigen Auflage versehenen Gewebelage, wobei die erste Kammer von einer ersten einlagigen Webnaht umschlossen ist.

Aus der WO 2007/128547 A1 ist eine Nahtkonstruktion für ein Gewebe für einen OPW-Airbag bekannt, welcher insbesondere für Personenrückhaltesysteme in Kraftfahrzeugen Verwendung findet. Während die Schaffung der Luft- bzw. Gasundurchlässigkeit der Flächen des genannten Airbags kein Problem darstellt, gibt es für die Dichtigkeit der OPW-Airbags "in der Gewebeebene", d. h. innerhalb der Webnaht immer noch keine zufriedenstellenden Ergebnisse. Dies gilt insbesondere dann, wenn die OPW-Airbags für eine längere Standzeit mit einer gegen Null gehenden Leckage und/oder für wiederholte wechselnde Befüllung und Entleerung vorgesehen sind.

Die WO 01/70543 A1 zeigt einen Airbag mit reduzierter Leckage, bei welchem mittels an neuralgischen Stellen angeordneten Druckbarrieren aus mehrfach gelegten oder umgeschlagenen Gewebelagen versucht wird, ein Entweichen des Füllgases aus dem Airbag in der oder parallel zur Gewebeebene zu minimieren.

Die DE 10 2006 044 385 A1 lehrt ein Verfahren zur Herstellung eines Gassacks für ein Airbag-System und einen nach diesem Verfahren hergestellten Gassack, dessen Nähte zur Verbesserung der Dichtwirkung außenseitig mit einer Beschichtung aus Silikon überzogen sind.

Aus der DE 103 26 757 A1 ist ein OPW-Airbag nach dem Oberbegriff des Anspruches 1 und ein Verfahren zur Herstellung von Luftsäcken bekannt, bei welchem einlagige Bereiche derart abgedichtet werden, dass sie für Fluide im Wesentlichen impermeabel sind.

Bei bekannten konfektionierten bzw. genähten textilen Luftsackbauteilen werden z. B. die mit einer dichten Auflage versehenen einlagigen Gewebelagen mit einem Dicht- oder Klebemittel (z. B. Silikon etc.) randseitig verbunden. Im Einsatz, d. h. bei Druckbeaufschlagung der Luftsackbauteile entsteht zwischen den einzelnen Auflagen entlang der parallel zueinander angeordneten Gewebelagen im Filamentverbund dennoch eine sogenannte horizontale Leckage. Diese Leckage führt zu einem permanenten Druckabfall, sodass sich dadurch die Standzeit des textilen Bauteils stark verkürzt. Abhilfe wird versucht, indem die mit Dicht- oder Klebemittel verbundenen Bereiche zur Verbesserung der Nahtfestigkeit zusätzlich mit einer Nähnaht verstärkt werden, um die im Anwendungsfall auf den Nahtbereich einwirkenden Kräfte aufnehmen zu können. Zusätzlich wird versucht, die Nähnaht mit einer Auflage z. B. einem Patch abzudichten, um eine Leckage an der Stelle des Nadeldurchtritts durch den Materialverbund von Auflage - Gewebe - Dichtmittel - Gewebe - Auflage zu verhindern. Diese Konstruktion hat aber zur Folge, dass sich der Randbereich der Luftsackbauteile steif und voluminös zeigt, bedingt durch die zusätzliche Abdichtung der Nähnaht. Es verschlechtert sich auch die Falt- und Rollbarkeit des Luftsackbauteils bei gleichzeitigem ungünstigem Ansteigen des Packraums. Auch die Variante, bei welcher alternativ zur Abdichtung der Randnaht zusätzlich zwischen den mit einer Auflage versehenen Gewebelagen ein Dichtband eingelegt wird, wonach die einzelnen Lagen mittels einer Nähnaht verbunden werden, bringt keine wesentliche Verbesserung der Leckagewerte in der Gewebeebene.

Bei der Fertigung zuvor beschriebener konfektionierter textiler Bauteile ist der hohe Zeit-, Material- und Kostenaufwand zu bemängeln. Auch ist bei konfektionierten Luftsäcken die Prüfung der Dichtigkeit der Luftsäcke nur mit großem Aufwand durchführbar.

Aus dem Stand der Technik bekannte OPW-Bauteile haben neben der horizontalen Leckage im Nahtbereich zwischen den mit einer Auflage versehenen Gewebelagen entlang des Gewebe- bzw. Filamentverbunds ein weiteres Problem mit im Einsatz möglicherweise fatalen Folgen. Die während des Aufblasprozesses auftretenden Kräfte können am Übergang vom zweilagigen Kammerbereich zum einlagigen Webnahtbereich zur Ablösung der dichtenden Auflage von der Gewebeoberfläche und dadurch zu einer zusätzlichen Leckagestelle führen. Hiermit ist ein solches OPW-Bauteil nicht mehr einsetzbar.

Bei der Fertigung von OPW-Bauteilen wurden viele Versuche angestellt, die Situation zu verbessern. Es lässt sich bisher jedoch auch bei den folgend beispielhaft genannten Verfahren wie Verschweißen mittels Ultraschall oder Laser, Abdichten der Webnaht in Form von Aufbringen eines niederviskosen Dichtmittels im Nahtbereich, vor dem Prozessschritt "Beschichten" oder bei Einsatz eines Dichtbands, welches entlang der Außenkontur um die Randnaht des textilen Bauteils gelegt und verklebt wird, keine ausreichend prozesssichere Abbildung in Bezug auf das Abdichten der Nahtbereiche erreichen.

Die vorgenannten Verfahren ermöglichen keine flächendeckende dreidimensionale Abdichtung des Nahtbereichs. Bei einigen Prozessvarianten muss der OPW-Luftsack zuvor von innen nach außen gewendet werden, um den Nahtbereich am Übergang vom zweilagigen Kammerbereich zum einlagigen Nahtbereich mittels eines Dichtmittels abdichten zu können.

Im Ergebnis ist festzustellen, dass das Herstellen eines dichten Systems mit den aus dem Stand der Technik bekannten Verfahren nicht möglich ist. Für aus dem Stand der Technik bekannte mit einem Fluid befüllbare textile, insbesondere in OPW-Konstruktion gebildete Bauteile, welche mit einer auf den Außenflächen aufgebrachten Auflage wie z.B. einem Laminat oder in üblicher Art aufgestrichenen Beschichtung versehen sind, ist noch keine ökonomisch einsetzbare und zuverlässige Lösung bekannt, welche eine Leckage im Randbereich der Webnaht in der Gewebeebene zuverlässig verhindert.

Der Erfindung liegt die Aufgabe zugrunde, einen OPW-Airbag mit einer Nahtkonstruktion für ein Gewebe vorzuschlagen, welcher die aus dem Stand der Technik bekannten Nachteile vermeidet oder zumindest stark verringert.

Die Aufgabe wird gelöst mit einem OPW-Airbag mit einer Nahtkonstruktion gemäß Anspruch 1, nämlich einem OPW-Airbag mit einer Nahtkonstruktion für ein Gewebe mit wenigstens einer, wenigstens zweilagigen ersten Kammer mit einer oberen und einer unteren, jeweils mit einer fluidundurchlässigen Auflage versehenen Gewebelage, die dadurch gekennzeichnet ist, dass benachbart zur ersten Kammer eine diese im Wesentlichen umschließende gewebte wenigstens zweilagige schlauchförmige zweite Kammer mit einer oberen und einer unteren, jeweils mit einer fluidundurchlässigen Auflage versehenen Gewebelage angeordnet ist, und dass daran anschließend wenigstens eine einlagige, beidseitig mit einer fluidundurchlässigen Auflage versehene Webnaht angeordnet ist, und dass die zweite Kammer mit einem Dichtmittel derart gefüllt ist, dass dieses, durch die obere und untere Gewebelage hindurch dringend mit der fluidundurchlässigen Auflage dichtend in Verbindung steht.

Der besondere Vorteil des erfindungsgemäßen OPW-Airbags besteht darin, dass das in den zweilagigen Bereich der zweiten Kammer eingebrachte Dichtmittel in die gesamte Gewebekonstruktion und hierbei auch in den offenen Faserverbund des zweilagigen Bereichs, d. h. der beiden Gewebelagen der zweiten Kammer und des einlagigen Webnahtbereichs und sogar in die benachbarten Randbereiche der Gewebelagen der ersten Kammer eindringt und diese Bereiche bis zum Kontakt mit der fluidundurchlässigen Auflage durchdringt, sodass die erste Kammer des OPW-Airbags fluiddicht abgeschlossen ist und folglich kein Fluid oder Gas mehr aus der ersten Kammer in die zweite Kammer und von dort nach außen gelangen kann. Die gesamte sog. "horizontale Gewebeebene" ist erfindungsgemäß völlig von Dichtmittel durchdrungen und verhindert ein Entweichen des Füllmediums aus dem OPW-Airbag damit mögliches Lecken des Füllmediums durch die horizontale Gewebeebene nach außen. Es ergibt sich eine gleichsam dreidimensionale Abdichtung des Nahtbereichs. Die erfindungsgemäße Konstruktion vereinfacht auch vorteilhafterweise die Dichtigkeitsprüfung eines OPW-Airbags, nämlich dadurch, dass Leckagen im Bereich der schlauchförmigen zweiten Kammereinfach visuell leicht erfasst werden können. Dies reduziert die Prüfkosten und damit auch die Herstellungskosten.

Aufgrund der Vermeidung der Horizontalleckage durch den Gewebe- bzw. Filamentverbund im Bereich der Umfangsnaht des OPW-Airbags ergibt sich vorteilhafterweise eine signifikante Erhöhung der Standzeit des OPW-Airbags, wobei das Packraumvolumen durch eine gegenüber Standard-OPW-Airbags vergleichbare Warendicke beibehalten werden kann. Ein weiterer Vorteil ist darin zu sehen, dass das im Stressbereich Kammer/Webnaht angeordnete Dichtmittel aufgrund des Hafteffekts im Kontakt mit der Auflage die Gefahr der Ablösung der fluidundurchlässigen Auflage reduziert. Die Erfindung ermöglicht eine prozesssichere Darstellung von abgedichteten textilen OPW-Bauteilen.

In einer vorteilhaften Ausbildung der Erfindung ist der OPW-Airbag dadurch gekennzeichnet, dass zwischen der ersten Kammer und der zweiten Kammer eine einlagige, beidseitig mit einer fluidundurchlässigen Auflage versehene, Zwischenwebnaht angeordnet ist. Diese Anordnung vermindert die Wahrscheinlichkeit eine Leckage in der Gewebeebene vorteilhafterweise noch weiter und erlaubt eine leichter falt- und rollbare Konstruktion des mit der erfindungsgemäßen Nahtkonstruktion ausgebildeten OPW-Airbags.

In einer weiteren vorteilhaften Ausbildung der Erfindung ist der OPW-Airbag dadurch gekennzeichnet, dass im Anschluss an die einlagige Webnaht eine zweilagige schlauchförmige dritte Kammer mit einer oberen und einer unteren, jeweils mit einer fluidundurchlässigen Auflage versehenen Gewebelage, und daran anschließend eine zweite einlagige, beidseitig mit einer fluidundurchlässigen Auflage versehene Webnaht angeordnet ist, und dass die dritte Kammer ebenfalls mit einem Dichtmittel derart gefüllt ist, dass dieses durch die obere und untere Gewebelage hindurch dringend mit der fluidundurchlässigen Auflage dichtend in Verbindung steht. Diese erfindungsgemäße Variante des OPW-Airbags stellt aufgrund der Vergrößerung der Fluidblockade eine weitere Erhöhung der Systemsicherheit für einen erfindungsgemäßen OPW-Airbag mit einer Nahtkonstruktion dar.

Zum besseren Verständnis der Erfindung wird diese im Folgenden anhand von Ausführungsbeispielen mit Hilfe einer Zeichnung näher erläutert.
- Fig. 1: zeigt in Schnittansicht schematisch einen Randbereich eines OPW-Airbags in aufgeblasenem Zustand mit herkömmlicher Nahtkonstruktion gemäß dem Stand der Technik.
- Fig. 2: zeigt in Schnittansicht schematisch einen Randbereich eines erfindungsgemäßen OPW-Airbags in aufgeblasenem Zustand mit einer Nahtkonstruktion mit erster und zweiter Kammer.
- Fig. 3: zeigt in Schnittansicht schematisch einen Randbereich eines erfindungsgemäßen OPW-Airbags in aufgeblasenem Zustand mit einem zweiten Ausführungsbeispiel einer Nahtkonstruktion mit erster und zweiter Kammer sowie einer dazwischen angeordneten Zwischenwebnaht.
- Fig. 4: zeigt in Schnittansicht schematisch einen Randbereich eines OPW-Airbags in aufgeblasenem Zustand mit einem dritten Ausführungsbeispiel einer erfindungsgemäßen Nahtkonstruktion mit erster, zweiter und dritter Kammer.
- Fig. 5: zeigt stark schematisiert und nicht maßstabsgetreu eine perspektivische Darstellung eines abgeschnittenen Teils eines geringfügig aufgeblasenen OPW-Airbags welcher mit einer Nahtkonstruktion nach Fig. 3 ausgebildet ist.

Zunächst soll geklärt sein, dass die Begriffe "Airbag", "Gassack" und "Luftsack" jeweils dieselbe Bedeutung haben. Die Begriffe "Gas", "Luft" oder "Fluid" werden in dieser Beschreibung jeweils gleichbedeutend für das Füllmedium eines Airbags verwendet.

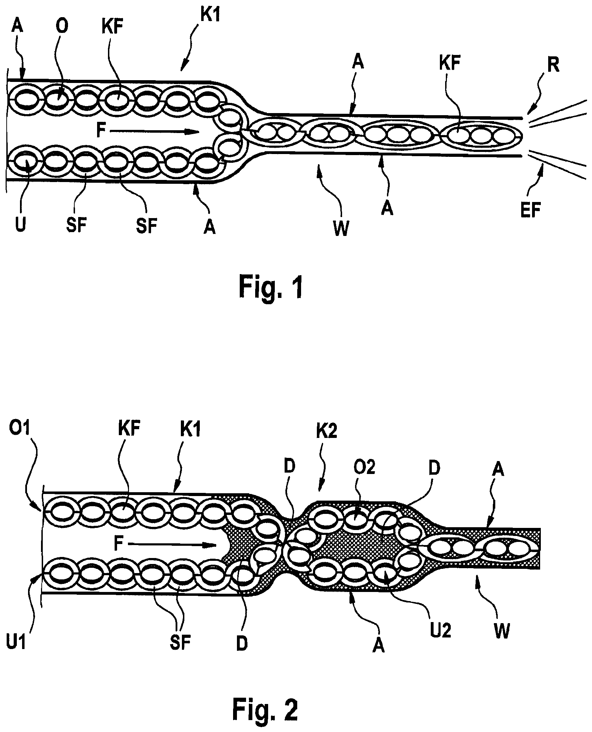

Fig. 1 zeigt eine aus dem Stand der Technik bekannte Nahtkonstruktion eines OPW-Bauteils am Übergang von einem zweilagigen zu einem einlagigen Bereich, wobei der zweilagige Bereich eine erste Kammer K1, also *die* Luftkammer des Airbags und der einlagige Bereich die den Airbag abschließende und umsäumende Webnaht W darstellt. Das textile OPW-Bauteil ist beidseitig mit einer fluidundurchlässigen Auflage A versehen, z.B. einer Folie oder einer Beschichtung, um die textilen Gewebelagen O und U fluidundurchlässig abzudichten. Im hier gezeigten aus dem Stand der Technik bekannten Anwendungsbeispiel kann das unter Druck einströmende Fluid in Richtung des Pfeils F im mit einer Auflage A versehenen Nahtbereich W horizontal durch die Gewebestruktur, sowie deren Filamentverbund entweichen und an der Position R austreten: siehe Bezugszeichen EF. Die Gewebestruktur ist schematisch durch als Kreise angegebene Kettfäden KF und die Kettfäden KF umschlingende Schussfäden SF skizziert.

In Fig. 2 ist eine Nahtkonstruktion dargestellt, wobei die einzelnen Komponenten, dort wo es möglich ist, analog der Darstellung gemäß Fig. 1 skizziert und bezeichnet sind. Fig. 2 zeigt eine Nahtkonstruktion mit einer ersten Kammer K1, der Luftsackkammer mit einer oberen 01 und einer unteren textilen Gewebelage U1, einer benachbarten zweiten Kammer K2 mit einer oberen 02 und einer unteren textilen Gewebelage U2 sowie einer daran anschließenden Webnaht W. Erfindungsgemäß ist in der Kammer K2 und in der Webnaht W ein Dichtmittel D, z. B. Silikon eingefügt, welches zweckmäßigerweise an einem (nicht gezeigten) Einfüllbereich der schlauchförmigen Kammer K2 unter einem geeigneten Druck eingespritzt wurde, sodass das Dichtmittel D, in die Fig. 2 durch Schraffur markierten Bereiche dringt. Hierbei dringt das Dichtmittel vorzugsweise auch bis in den Randbereich der Kammer K1 sowie bis zur Auflage A der Gewebelagen O und U ein und bildet erfindungsgemäß einen "Dichtungsverbund".

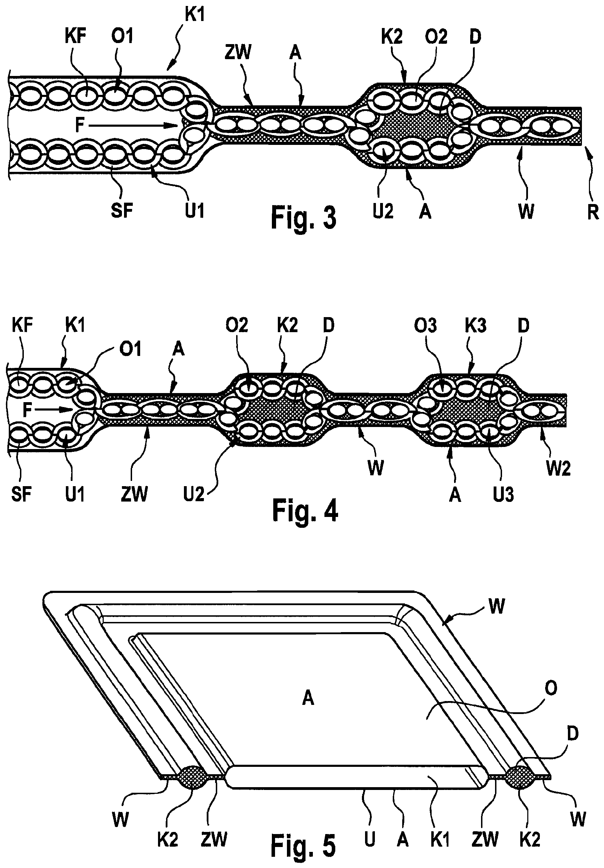

Fig. 3 zeigt eine vorteilhafte Ausführungsform der Nahtkonstruktion eines OPW-Bauteils analog Fig. 2, wobei zwischen den Kammern K1 und K2 eine Zwischenwebnaht ZW angeordnet ist.

Fig. 4 zeigt wiederum eine vorteilhafte Weiterbildung der Ausführungsform der Nahtkonstruktion eines erfindungsgemäßen OPW-Bauteils analog Fig. 3, bei welcher der ersten Webnaht W eine dritte Kammer K3 mit einer oberen 03 und einer unteren textilen Gewebelage U3 folgt, welcher sich eine zweite Webnaht W2 anschließt. Die erfindungsgemäße Ausbildung einer Nahtkonstruktion gemäß Fig. 4 zeigt zwei zweilagige Bereiche, nämlich die Kammern K2 und K3, angeordnet zwischen drei einlagigen Bereichen: Zwischenwebnaht ZW, erste Webnaht W und zweite Webnaht W2. Diese Konstruktion ermöglicht es vorteilhafterweise, die zweilagigen Kammern K2 und K3 in einer reduzierten Fadendimension auszuführen, um ein möglicherweise zu starkes Auswölben der zweilagigen Kammern K2 und K3 durch das eingebrachte Dichtmittel D zu vermeiden, welches sich u. U. negativ auf das Falt- oder Rollverhalten und folglich auf einen Anstieg des Packraums des Airbags auswirken könnte.

In Fig. 5 ist stark schematisiert und nicht maßstabsgetreu eine perspektivische Darstellung eines abgeschnittenen Teils eines geringfügig aufgeblasenen OPW-Airbags welcher mit einer Nahtkonstruktion nach Fig. 3 ausgebildet ist, angedeutet, wobei mittig die Airbagkammer K1 zu erkennen ist, welche von einer Zwischenwebnaht ZW umschlossen ist, der die mit Dichtmittel D gefüllte Kammer K2 folgt, welche wiederum von einer Webnaht W umgeben wird. Die obere und untere Gewebelage O und U der ersten Kammer K1 ist mit einer fluidundurchlässigen Auflage A beschichtet.

Allen Ausführungsbeispielen gemein ist die erfindungsgemäße Anordnung derart, dass in den zweilagigen Bereichen der Nahtkonstruktion, d. h. den Kammern K2 und ggf. K3 eine Dichtmasse D eingefüllt ist. Das dort eingebrachte Dichtmittel D dringt in und durch die Gewebekonstruktion, hierbei in den offenen Faserverbund der ein- und zweilagigen Bereiche ein und versiegelt diese bis hin zur Auflage A. Dadurch wird das unter Druck stehende Fluid (Pfeil F) daran gehindert, horizontal durch die Gewebekonstruktion zu strömen und aus dem OPW-Airbag zu entweichen.

## Patentansprüche

1. OPW-Airbag mit einer Nahtkonstruktion für ein Gewebe mit wenigstens einer, wenigstens zweilagigen ersten Kammer (K1) mit einer oberen und einer unteren, jeweils mit einer fluidundurchlässigen Auflage (A) versehenen Gewebelage (01, U1), **dadurch gekennzeichnet, dass** benachbart zur ersten Kammer (K1) eine diese im Wesentlichen umschließende gewebte wenigstens zweilagige schlauchförmige zweite Kammer (K2) mit einer oberen und einer unteren, jeweils mit einer fluidundurchlässigen Auflage (A) versehenen Gewebelage (02, U2) angeordnet ist, und dass daran anschließend wenigstens eine einlagige, beidseitig mit einer fluidundurchlässigen Auflage (A) versehene Webnaht (W) angeordnet ist, und dass die zweite Kammer (K2) mit einem Dichtmittel (D) derart gefüllt ist, dass dieses, durch die obere und untere Gewebelage (02, U2) hindurch dringend mit der fluidundurchlässigen Auflage (A) dichtend in Verbindung steht.

2. OPW-Airbag nach Anspruch 1, **dadurch gekennzeichnet, dass** zwischen der ersten Kammer (K1) und der zweiten Kammer (K2) eine einlagige, beidseitig mit einer fluidundurchlässigen Auflage (A) versehene, Zwischenwebnaht (ZW) angeordnet ist.

3. OPW-Airbag nach Anspruch 1 oder 2, **dadurch gekennzeichnet, dass** im Anschluss an die einlagige Webnaht (W) eine zweilagige schlauchförmige dritte Kammer (K3) mit einer oberen und einer unteren, jeweils mit einer fluidundurchlässigen Auflage (A) versehenen Gewebelage (03, U3), und daran anschließend eine zweite einlagige, beidseitig mit einer fluidundurchlässigen Auflage (A) versehene Webnaht (W2) angeordnet ist, und dass die dritte Kammer (K3) ebenfalls mit einem Dichtmittel (D) derart gefüllt ist, dass dieses durch die obere und untere Gewebelage (03, U3) hindurch dringend mit der fluidundurchlässigen Auflage (A) dichtend in Verbindung steht.

## Claims

1. OPW airbag having a seam construction for a fabric with at least one, at least two-layered first chamber (K1) having an upper and a lower fabric layer (01, U1), each of which being provided with a fluid-impermeable coating (A), **characterized in that** adjacent to the first chamber (K1) a woven, at least two-layered tubular second chamber (K2) is arranged, which essentially surrounds the first chamber and has an upper and a lower fabric layer (02, U2), each of which being provided with a fluid-impermeable coating (A), and that, adjoining the same, at least one single-layered woven seam (W) provided on both sides with a fluid-impermeable coating (A) is arranged, and that the second chamber (K2) is filled with a sealing agent (D) such that the latter is sealingly connected to the fluid-impermeable coating (A) by penetrating the upper and lower fabric layers (02, U2).

2. OPW airbag according to claim 1, **characterized in that** between the first chamber (K1) and the second chamber (K2) a single-layered intermediate woven seam (ZW) provided on both sides with a fluid-impermeable coating (A) is arranged.

3. OPW according to claim 1 or 2, **characterized in that** adjoining the single-layered woven seam (W) a two-layered tubular third chamber (3) with an upper and a lower fabric layer (03, U3) is arranged, each of which being provided with a fluid-impermeable coating (A), and adjoining the same a second single-layered woven seam (W2) provided on both sides with a fluid impermeable coating (A) is arranged, and that the third chamber (K3) is likewise filled with a sealing agent (D) in such a way that the latter is sealingly connected to the fluid-impermeable coating (A) by penetrating the upper and lower fabric layers (03, U3).

## Revendications

1. Sac gonflable tissé d'une seule pièce avec une structure de couture pour un tissu avec au moins une première chambre (K1) comportant au moins deux couches avec une couche supérieure et une couche inférieure de tissu (01, U1), chacune des couches de tissu étant recouverte d'un revêtement imperméable aux fluides (A), **caractérisé en ce que** adjacente à la première chambre (K1) est insérée une deuxième chambre (K2) de forme tubulaire, tissée avec au moins deux couches, entourant en grande partie la première chambre, avec une couche de tissu supérieure et inférieure (02, U2), chacune recouverte d'un revêtement imperméable aux fluides (A), et que celle-ci est prolongée par au moins une jointure tissée (W) à une couche, recouverte des deux côtés d'un revêtement imperméable aux fluides (A) et que la deuxième chambre (K2) est remplie d'un matériau d'étanchéité (D) de telle façon que celui-ci est relié de manière étanche au revêtement imperméable aux fluides (A) en traversant la couche de tissu supérieure et inférieure (02, U2).

2. Sac gonflable tissé d'une seule pièce selon la revendication 1, **caractérisé en ce que** une jointure tissée intermédiaire (ZW) à une couche, recouverte des deux côtés d'un revêtement imperméable aux fluides (A), est placée entre la première chambre (K1) et la deuxième chambre (K2).

3. Sac gonflable tissé d'une seule pièce selon la revendication 1 ou 2, **caractérisé en ce que** dans le prolongement de la jointure tissée à une couche (W) est placée une troisième chambre (K3) à deux couches, de forme tubulaire, avec une couche de tissu (03, U3) supérieure et inférieure, chacune recouverte d'un revêtement imperméable aux fluides (A), puis une deuxième jointure (W2) tissée à une couche, recouverte des deux côtés d'un revêtement imperméable aux fluides (A) et **en ce que** la troisième chambre (K3) est également remplie d'un matériau d'étanchéité (D) de telle façon que celui-ci est relié de manière étanche au revêtement imperméable aux fluides (A) en traversant la couche de tissu supérieure et inférieure (02, U2).
